# EUROPÄISCHE PATENTSCHRIFT

(11) **EP 3 717 882 B1**
(45) Veröffentlichungstag und Bekanntmachung des Hinweises auf die Patenterteilung: **16.03.2022**
(21) Anmeldenummer: 18807979.2
(22) Anmeldetag: 23.11.2018
(51) Int. Cl.: G01M 3/00, G01M 3/28

(54) **VERFAHREN ZUR MESSUNG DER GROESSE EINES LECKAGESTROMES EINER DICHTUNG**
METHOD FOR MEASURING A LEAKAGE FLOW OF A SEAL
PROCÉDÉ DE MESURE D'UN FLUX DE FUITE D'UN JOINT D'ÉTANCHÉITÉ

(30) Priorität: 30.11.2017 DE 102017221510
(43) Veröffentlichungstag der Anmeldung: 07.10.2020
(73) Patentinhaber: Christian Maier GmbH & Co. KG, Maschinenfabrik, 89520 Heidenheim an der Brenz (DE)
(72) Erfinder: HÖRGER, Lukas, 89522 Heidenheim (DE); SCHWENK, Günther, 89520 Heidenheim (DE)
(74) Vertreter: Dr. Weitzel & Partner
(86) Internationale Anmeldenummer: PCT/EP2018/082326
(87) Internationale Veröffentlichungsnummer: WO 2019/105854

(56) Entgegenhaltungen:
- EP-A1- 2 336 743
- EP-B1- 1 752 696
- DE-A1- 19 913 968
- DE-A1-102008 043 887
- DE-A1-102012 109 237
- DE-A1-102013 105 992
- DE-T2- 69 109 009

## Beschreibung

Die vorliegende Erfindung betrifft ein Verfahren zur Messung der Größe eines Leckagestromes einer Dichtung, beispielsweise einer Gleitringdichtung, gemäß dem Oberbegriff von Anspruch 1.

Es ist bekannt, den Zustand einer Dichtung, beispielsweise einer Wellendichtung oder einer Drehdurchführung, wie sie die vorliegende Erfindung insbesondere betrifft, mit einem Leckagesensor zu überwachen. Dabei kann der Leckagesensor in einem Leckagekanal, auch Detektionskanal genannt, positioniert werden und den Durchfluss des durch den Leckagekanal strömenden Leckagemediums messen. Bei dem Leckagemedium handelt es sich um einen Teil des Mediums aus einem Raum, der mittels der Dichtung abgedichtet wird. Bei dem Leckagestrom handelt es sich demnach um einen Strom von Medium, das mehr oder minder unbeabsichtigt über die Dichtung hinweg getreten ist, wobei je nach Einsatzort und Anwendung der Dichtung grundsätzlich mit einem gewissen Leckagestrom gerechnet wird und der Leckagestrom bis zu einer bestimmten Größe als akzeptabel vorgegeben wird. Erst wenn der Leckagestrom eine vorgegebene Größe beziehungsweise einen Größengrenzwert überschreitet, kann hieraus auf eine nicht ordnungsgemäße Funktion der Dichtung geschlossen werden.

EP 1 752 696 B1 offenbart eine Drehdurchführung mit einem Leckagesensor, wobei der Leckagesensor vorzugsweise ein nach dem kalorimetrischen Messprinzip arbeitender Durchflusssensor ist. Hingegen offenbart EP 2 341 328 A1 eine Dichtungsanordnung mit einem Leckagesensor, der eine durch einen Differenzdruck gesteuerte Membran und einen Wegsensor umfasst.

EP 2 336 743 A1 offenbart eine Dichtungsanordnung mit einem drosselartig ausgebildeten Strömungskanal für die Leckage und zumindest einem Sensor zur Erfassung der Leckage im Strömungskanal, wobei der Sensor zwei in Strömungsrichtung der Leckage beabstandete Temperatursensoren aufweist, die sich jeweils in einem gut wärmeleitenden Kontakt mit dem Leckagestrom befinden und gleichzeitig gegeneinander gut wärmeisoliert sind. Im Leckagefall strömt der Leckagestrom durch den Strömungskanal und erzeugt dadurch ein charakteristisches Temperaturprofil zwischen den beiden Temperatursensoren, woraus auf den Leckagestrom geschlossen werden kann. Demgemäß handelt es sich auch hier um einen nach dem kalorimetrischen Messprinzip arbeitenden Sensor. Die aus EP 2 336 743 A1 bekannten Merkmale sind im Oberbegriff von Anspruch 1 zusammengefasst.

EP 2 314 873 A2 offenbart einen Leckagesensor für eine Schraubenpumpe, der als optoelektronischer Sensor, als Schwimmerschalter oder als Ultraschallsensor ausgeführt sein kann.

EP 1 916 509 B1 offenbart eine Dichtungsanordnung mit einer Leckageerfassungsvorrichtung, wobei die Leckageerfassungsvorrichtung ein Leckagereservoir mit einer Vliesstoffscheibe umfasst.

EP 2 813 740 A2 offenbart eine Drehdurchführung mit einer Gleitringdichtung, wobei der Anpressdruck der Gleitringdichtung variiert wird und zur Steuerung des Anpressdruckes ein Leckagesensor in einer Leckageleitung vorgesehen sein kann.

DE 199 13 968 A1 offenbart einen thermischen Durchflusssensor und ein Verfahren zum Bestimmen des Durchflusses eines Fluids. Der thermische Durchflusssensor wird mit einer Wärmeleitfähigkeitsmesszelle ausgestattet, um bei der Durchflussmessung zusammensetzungsabhängige Unterschiede des Fluids berücksichtigen zu können. Da der thermische Durchflusssensor sowohl einen Strömungssensor als auch die Wärmeleitfähigkeitsmesszelle aufweist, ist sichergestellt, dass alle Messungen immer an demselben Fluid erfolgen. Es kann eine Kurvenschar vorgegeben werden, die die Heizleistung einer ersten Heizeinrichtung als Funktion eines zu bestimmenden Durchflusses angibt. Welche Kurve dieser Kurvenschar zu einem gegebenen Zeitpunkt eingesetzt werden muss, hängt von der Zusammensetzung des Fluids zu diesem Zeitpunkt ab, also von dessen Wärmeleitvermögen oder dem hierfür maßgeblichen Messwert, nämlich einer einer zweiten Heizeinrichtung zugeführten Heizleistung. Die benötigten Informationen über die Zusammensetzung des Fluids werden mit Hilfe der Wärmeleitfähigkeitsmesszelle gewonnen, da sich die Zusammensetzung des Fluids empirisch aus der Wärmeleitfähigkeit ermitteln lässt.

DE 10 2008 043 887 A1 offenbart ein Verfahren und Messsystem zur Bestimmung und/oder Überwachung einer Aggregatszustandsänderung eines Messmediums an einem thermischen Durchflussmessgerät. Mittels der Temperatur des Messmediums, mittels der chemischen Zusammensetzung des Messmediums und mittels des Partialdrucks zumindest eines ersten Teils des Messmediums und/oder mittels des Gesamtdrucks des Messmediums wird zumindest eine Phasengrenzlinie zumindest des ersten Teils des Messmediums bestimmt, wobei zumindest ein erstes Messsignal aus einer Temperaturdifferenz zwischen einem ersten Temperatursensor und einem zweiten Temperatursensor des thermischen Durchflussmessgeräts und/oder aus einer dem Messmedium zugeführten Heizleistung bereitgestellt wird. Die Temperatur des Messmediums wird vom thermischen Durchflussmessgerät selbst ermittelt, Daten über die chemische Zusammensetzung des Messmediums, den Partialdruck des betreffenden Teils des Messmediums und/oder den Gesamtdruck des Messmediums müssen vom Bediener angegeben oder mit externen und/oder integrierten Messgeräten ermittelt und zur Verfügung gestellt werden.

DE 691 09 009 T2 offenbart einen Durchflussmesser mit Korrektur in Abhängigkeit von der Flüssigkeitszusammensetzung und Temperatur.

DE 10 2013 105 992 A1 offenbart eine thermische Durchflussmessvorrichtung und Verfahren zur Bestimmung und/oder Überwachung eines Durchflusses eines Mediums, wobei auf funktionale Abhängigkeiten einer einem thermischen Widerstandsthermometer zugeführten Leistung und anderen Parametern, wie zum Beispiel der Mediumstemperatur, Viskosität, Reynolds-Nummer, etc. verwiesen wird. Zur Verbesserung der Messgenauigkeit sollten diese Parameter berücksichtigt werden.

DE 10 2012 109 237 A1 offenbart ein thermisches Durchflussmessgerät, zum Beispiel für durch eine Rohrleitung strömende Flüssigkeiten oder Gase. Bei solchen Durchflussmessgeräten wird nicht ein kleiner ungewollter Leckagestrom in einer Dichtung gemessen, sondern viel größere Strömungsmengen in viel größeren Kanälen. Dabei werden bei solchen Durchflussmessgeräten thermische Massedurchflussmessungen nur für besonders hohe Strömungsgeschwindigkeiten angewendet, wohingegen bei geringen Fließgeschwindigkeiten die sogenannte Laufzeitdifferenzmethode verwendet wird. Entsprechend der großen zur Verfügung stehenden Bauräume in solchen vergleichsweise großen Strömungskanälen wird das Durchflussmessgerät in der Regel in ein eigenes Messrohr eingebaut.

Die vorgenannten thermischen Durchflusssensoren beziehungsweise thermischen Durchflussmessgeräte werden zum Beispiel für durch eine Rohrleitung strömende Flüssigkeiten oder Gase verwendet. Bei einem solchen Flüssigkeits- oder Gasstrom handelt es sich jedoch nicht um den Leckagestrom einer Dichtung, wie ihn die vorliegende Erfindung betrifft.

Die genannten Leckagesensoren zur Messung der Größe eines Leckagestromes einer Dichtung weisen den Nachteil auf, dass sie jeweils speziell für einen vorgegebenen einzelnen Anwendungsfall ausgelegt und kalibriert werden müssen. Darüber hinaus haben sich die Messungen mit den bekannten Leckagesensoren in der Praxis als nicht ausreichend zuverlässig erwiesen, um den aktuellen Zustand einer Dichtung zuverlässig zu ermitteln.

Der vorliegenden Erfindung liegt die Aufgabe zugrunde, ein Verfahren zur Messung der Größe eines Leckagestromes einer Dichtung anzugeben, welches in der Praxis zu besseren Ergebnissen führt.

Die erfindungsgemäße Aufgabe wird durch ein Verfahren mit den Merkmalen des unabhängigen Patentanspruchs gelöst. In den abhängigen Patentansprüchen werden vorteilhafte und besonders zweckmäßige Ausgestaltungen der Erfindung angegeben.

Obwohl die bekannten nach dem kalorimetrischen Messprinzip arbeitenden Leckagesensoren anhand einer erfassten "künstlich" im Leckagestrom erzeugten Temperaturdifferenz arbeiten und damit für alle möglichen Leckagestromtemperaturen geeignet sein sollten, haben die Erfinder erkannt, dass in der Praxis die Absoluttemperatur des Leckagemediums, der Aggregatzustand und/oder die Zusammensetzung einen signifikanten Einfluss auf das Messergebnis haben können.

Gemäß einer Ausführungsform des erfindungsgemäßen Verfahrens zur Messung der Größe eines Leckagestromes an einer Dichtung, wobei auf einer Leckageseite der Dichtung ein Leckagesensor vorgesehen ist, der wenigstens ein Heizelement und wenigstens zwei Temperatursensoren umfasst, die in wärmeübertragender Verbindung mit dem Leckagestrom stehen, ist daher nicht nur ein fortlaufendes oder intermittierendes Erfassen einer Temperaturdifferenz im Leckagestrom über einem vom Leckagestrom durchströmten Abschnitt eines Leckagekanals mit den Temperatursensoren vorgesehen, wobei gleichzeitig eine vorbestimmte konstante Referenzwärmemenge mit dem Heizelement erzeugt wird und in den Leckagestrom im Abschnitt des Leckagekanals übertragen wird, und die Größe des aktuellen Leckagestromes in Abhängigkeit der aktuellen erfassten Temperaturdifferenz ermittelt wird, sondern bei der Ermittlung der Größe des aktuellen Leckagestromes wird zusätzlich zu der aktuell erfassten Temperaturdifferenz die aktuelle absolute Temperatur des Leckagestromes im durchströmten Abschnitt vor dem Heizelement erfasst und berücksichtigt. Somit geht in die Messung des Leckagestromes einerseits die erfasste Temperaturdifferenz ein, und andererseits wird zudem die absolute Temperatur des Leckagestromes, das heißt des durch den Leckagekanal strömenden Mediums erfasst und geht in die Messung ein, wobei unterschiedliche Absoluttemperaturen dann zu voneinander abweichenden Messergebnissen führen können.

Zusätzlich kann bei der Ermittlung der Größe des aktuellen Leckagestromes zusätzlich zu der aktuell erfassten Temperaturdifferenz ein Aggregatzustand und/oder die Zusammensetzung eines den Leckagestrom ausbildenden Mediums berücksichtigt werden.

Das erfindungsgemäße Verfahren ist somit für verschiedene über eine Dichtung übertretende Medien, beispielsweise Öl und Wasser, geeignet. Insbesondere bei der Messung der Größe eines Leckagestromes einer Dichtung, bevorzugt Gleitringdichtung, wie sie in einer Drehdurchführung vorgesehen wird, können mit einer solchen Drehdurchführung je nach einzelnem Einsatzfall jeweils verschiedene Medien aus einem stationären in ein umlaufendes Bauteil oder umgekehrt oder zwischen zwei mit verschiedener Drehzahl umlaufenden Bauteilen übergeben werden, wobei der jeweilige Mediumstrom mit einer entsprechenden Dichtung abgedichtet wird. Wenn nun bevorzugt für den jeweiligen Anwendungsfall einstellbare beziehungsweise vorgebbare Parameter berücksichtigt werden, die beispielsweise die Mediumart beziehungsweise die Zusammensetzung des Mediums, eine Grenzleckagestromgröße und/oder einen Durchmesser der Dichtung, wie nachfolgend noch erläutert wird, angeben, so kann das Verfahren mit ein und derselben Dichtungskonstruktion sehr universell verwendet werden. Insbesondere kann mit wenigstens einem Parameter auch eine Temperatur oder ein Temperaturbereich angegeben werden, die/der einer zu erwartenden Betriebstemperatur des Mediums und/oder des Leckagestromes beziehungsweise einem entsprechenden Temperaturbereich entspricht.

Wenn vorliegend von der Größe des Leckagestroms die Rede ist, so kann es sich hierbei um den Volumenstrom oder den Massenstrom des Leckagemediums handeln, das durch den Leckagekanal strömt.

Ferner sieht eine alternative Ausführungsform der Erfindung vor, dass anstelle der Erzeugung einer vorbestimmten konstanten Referenzwärmemenge mit dem Heizelement bei dem fortlaufenden oder intermittierenden Erfassen der Temperaturdifferenz im Leckagestrom eine variable Wärmemenge mit dem Heizelement erzeugt wird und diese Wärmemenge in den Leckagesstrom im Abschnitt des Leckagekanals übertragen wird, wobei eine konstante Temperaturdifferenz im Leckagestrom über einem vom Leckagestrom durchströmten Abschnitt eines Leckagekanals fortlaufend oder intermittierend eingestellt wird und die Größe des aktuellen Leckagestromes in Abhängigkeit der aktuell erzeugten Wärmemenge ermittelt wird.

Bevorzugt wird vor dem fortlaufenden oder intermittierenden Erfassen einer Temperaturdifferenz beziehungsweise vor dem fortlaufenden oder intermittierenden Einstellen einer konstanten Temperaturdifferenz und dem damit verbundenen Ermitteln der Größe des aktuellen Leckagestromes in Abhängigkeit der aktuell erfassten Temperaturdifferenz oder in Abhängigkeit der aktuell erzeugten Wärmemenge die Messung zunächst kalibriert, wobei eine vorgegebene Temperaturdifferenz im Leckagestrom über dem durchströmten Abschnitt eingestellt wird, indem der Leckagestrom in dem durchströmten Abschnitt mit dem Heizelement aufgeheizt wird, wobei die sich bei Erreichen der vorgegebenen Temperaturdifferenz ergebende vom Heizelement erzeugte Wärmemenge als Referenzwärmemenge bestimmt wird. Diese Referenzwärmemenge wird somit der vorgegebenen Temperaturdifferenz zugehörig festgesetzt.

Bevorzugt wird die Kalibrierung der Messung für verschiedene absolute Temperaturen des Leckagestromes im durchströmten Abschnitt vor dem Heizelement durchgeführt und es werden verschiedene Referenzwärmemengen bestimmt und der jeweiligen absoluten Temperatur zugeordnet, und bei der Ermittlung der Größe des aktuellen Leckagestromes wird diese Temperaturzuordnung berücksichtigt. Es kann also beispielsweise eine Kurvenschar mit Kurven für verschiedene Absoluttemperaturen des

Leckagemediums empirisch ermittelt und in einer Steuervorrichtung hinterlegt werden, sodass bei der späteren Messung auf diese Kurvenschar zurückgegriffen werden kann, wobei entsprechend der dann erfassten absoluten Temperatur des Leckagestromes die zugehörige Kurve mit der Leckagestromgröße zugeordnet zu einer Temperaturdifferenz ausgewählt wird und entsprechend der aktuell erfassten Temperaturdifferenz die Leckagestromgröße mittels dieser Kurve bestimmt wird.

Gemäß einer Ausführungsform der Erfindung kann zur Kalibrierung der Messung ferner mit dem Heizelement die Referenzwärmemenge erzeugt werden und durch gezieltes Variieren der Größe des Leckagestromes können die sich dabei einstellenden Temperaturdifferenzen erfasst und der jeweiligen Leckagestromgröße zugeordnet werden, und bei der Ermittlung der Größe des aktuellen Leckagestromes kann diese Temperaturdifferenzzuordnung berücksichtigt werden.

Die Temperaturdifferenzzuordnung kann beispielsweise mittels einer Leckagestromgrößen-Temperaturdifferenz-Kurve erfolgen und die Temperaturzuordnung kann mittels einer Zuordnung einer Leckagestromgrößen-Temperaturdifferenz-Kurve zu der jeweiligen absoluten Temperatur erfolgen.

Obwohl die Zuordnung anhand von Kurven dargestellt wurde, kommen auch andere Zuordnungen in Betracht, beispielsweise durch wenigstens eine mathematische Funktion oder durch wenigstens eine Tabelle.

Gemäß einer Ausführungsform der Erfindung wird eine Grenzleckagestromgröße vorgegeben und die aktuell ermittelte Größe des Leckagestromes wird mit der Grenzleckagestromgröße verglichen und in Abhängigkeit dieses Vergleichs wird eine Warnmeldung oder ein Warnsignal ausgegeben, wobei die Grenzleckagestromgröße in Abhängigkeit eines Durchmessers der Dichtung vorgegeben wird. Hierbei kann berücksichtigt werden, dass bei vergleichsweise größeren Dichtungen ein größerer Leckagestrom zulässig ist als bei vergleichsweise kleineren Dichtungen.

Beispielsweise werden verschiedenen Durchmessern der Dichtung verschiedene Grenzleckagestromgrößen zugeordnet, sodass bei einer Initialisierung oder Kalibrierung des Leckagesensors beziehungsweise einer diesem zugeordneten Steuerung die aktuelle Dichtungsgröße, beispielsweise deren Nenndurchmesser, eingegeben werden kann, um damit den Grenzwert, die Grenzleckagestromgröße, vorzugeben, ab welcher eine Warnmeldung oder ein Warnsignal ausgegeben werden soll.

Insbesondere erfolgt die Ausgabe der Warnmeldung und/oder des Warnsignals, wenn die ermittelte aktuelle Leckagestromgröße gleich oder größer als die vorgegebene Grenzleckagestromgröße ist.

Die erfindungsgemäße Berücksichtigung der aktuellen absoluten Temperatur des Leckagestromes und des Aggregatzustandes und/oder der Zusammensetzung des Mediums des Leckagestromes können auch kombiniert werden.

Ein erfindungsgemäßer Leckagesensor zur Verwendung in einem erfindungsgemäßen Verfahren umfasst wenigstens ein Heizelement und wenigstens zwei Temperatursensoren, wobei die Temperatursensoren mit Abstand zueinander entlang eines Leckagekanals positioniert sein können und damit den durchströmten Abschnitt zwischen sich einschließen. In diesem durchströmten Abschnitt, insbesondere unmittelbar vor dem stromabwärts gelegenen Temperatursensor, kann das Heizelement vorgesehen sein, um den Leckagestrom beziehungsweise das Leckagemedium aufzuheizen, bevor es den zweiten Temperatursensor erreicht.

Bei dem Leckagemedium handelt es sich insbesondere um ein flüssiges Medium, beispielsweise Öl oder Wasser oder ein Gemisch mit Öl und/oder Wasser. Der Leckagekanal kann beispielsweise durch ein Rohr, beispielsweise aus Edelstahl, gebildet werden, insbesondere mit einem Durchmesser zwischen 2 mm und 10 mm, bevorzugt zwischen 3 mm und 5 mm und einer vergleichsweise geringen Wandstärke, beispielsweise von bis zu 0,5 mm, bis zu 0,3 mm oder bis zu 0,1 mm. Auf das Rohr können von außen die Temperatursensoren, beispielsweise als Pt-Sensoren, aufgebracht werden. Der weiter stromabwärts gelegene Temperatursensor kann auch ein Sensor mit integriertem Heizelement sein.

Das Rohr kann beispielsweise strömungsleitend, insbesondere mittels eines Schlauches, mit einem Leckageraum hinter einer Dichtung, beispielsweise einer Gleitringdichtung, insbesondere einer Drehdurchführung, verbunden sein. Der Leckagestrom, dessen Größe ermittelt werden soll, kann beispielsweise ein Leckagestrom sein, der an der Dichtfläche einer Gleitringdichtung zwischen Gleitring und Gegenring aus einem mit der Gleitringdichtung abgedichteten Raum austritt und von dort insbesondere über einen Leckageraum zu dem Leckagesensor, insbesondere umfassend das genannte Rohr, strömt. Hierfür kann der Leckagesensor an einer geodätisch tieferen Stelle als der tiefste Punkt der Gleitringdichtung vorgesehen sein, um sicherzustellen, dass der gesamte Leckagestrom zum Leckagesensor strömt.

Der Leckagesensor kann mit einer zugehörigen Auswerteelektronik in Form einer Steuervorrichtung in einem Gehäuse aufgenommen sein.

Die Erfindung soll nachfolgend anhand eines Ausführungsbeispiels und den Figuren exemplarisch beschrieben werden.

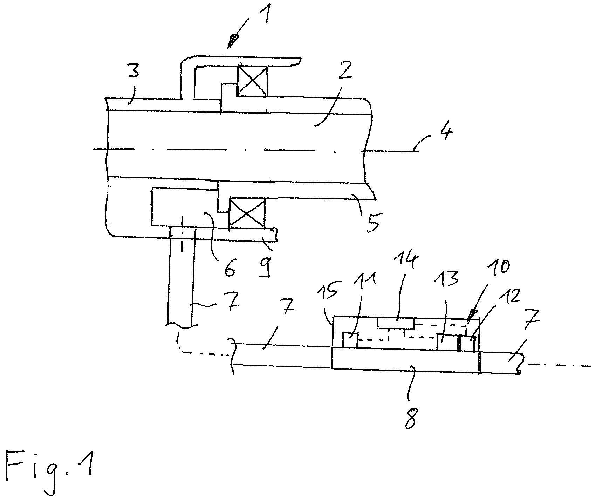

In der Figur 1 ist schematisch eine Drehdurchführung mit einer Gleitringdichtung 1 gezeigt, welche einen ein Medium führenden Kanal 2 gegenüber der Umgebung abdichtet. Nur beispielhaft erstreckt sich der Kanal 2 aus einem stehenden Bauteil 3 in ein um eine Drehachse 4 umlaufendes Bauteil 5. Dies ist jedoch nur beispielhaft und die Erfindung ist bei jeglicher Dichtung anwendbar, insbesondere auch bei Pumpen- oder Kompressordichtungen.

Auf einer dem Kanal 2 abgewandten Seite ist ein Leckageraum 6 vorgesehen. Dieser Leckageraum 6 nimmt aus dem Kanal 2 über die Gleitringdichtung 1 übertretendes Medium auf. Am Leckageraum 6 ist ein Leckagekanal 7 angeschlossen, der einen vom Leckagestrom durchströmten Abschnitt 8 aufweist. Insbesondere verläuft der Leckagekanal 7 außerhalb des Leckageraumes 6, beispielsweise außerhalb eines die Gleitringdichtung 1 aufnehmenden Gehäuses 9, das beispielsweise das stehende Bauteil 3 umfasst oder ausbildet.

Im oder am Abschnitt 8 des Leckagekanals 7 ist ein Leckagesensor 10 vorgesehen, umfassend einen ersten Temperatursensor 11 und einen zweiten Temperatursensor 12 sowie ein Heizelement 13. Der erste Temperatursensor 11 ist an einem stromaufwärtigen Ende des Abschnitts 8 positioniert, der zweite Temperatursensor 12 an einem stromabwärtigen Ende. In Strömungsrichtung des Leckagestroms zwischen dem ersten Temperatursensor 11 und dem zweiten Temperatursensor 12 ist das Heizelement 13 positioniert, hier nahe oder vergleichsweise näher dem zweiten Temperatursensor 12.

Ferner kann eine Steuervorrichtung 14 vorgesehen sein, die beispielsweise die Temperatursensoren 11, 12 und das Heizelement 13 steuert und eingerichtet ist, ein erfindungsgemäßes Verfahren auszuführen. Die Steuervorrichtung 14 und die Sensoren 11, 12 können zusammen mit dem Heizelement 13 insbesondere in einem gemeinsamen Gehäuse 15 positioniert sein.

Erfindungsgemäß erfasst der Leckagesensor 10 nicht nur eine Temperaturdifferenz des Leckagestroms mittels dem ersten Temperatursensor 11 und dem zweiten Temperatursensor 12, wobei das Leckagemedium zugleich mit dem Heizelement 13 beheizt wird, sondern beispielsweise der erste Temperatursensor 11 wird auch dazu herangezogen, die Absoluttemperatur des Leckagestroms in Strömungsrichtung vor dem Heizelement 13 zu erfassen. Wie dargelegt, kann zusätzlich auch der Aggregatzustand des Leckagestromes und/oder eine Zusammensetzung desselben bei der Bestimmung des aktuellen Leckagestroms herangezogen werden, beispielsweise indem der Aggregatzustand und/oder die Zusammensetzung des Leckagemediums in die Steuervorrichtung 14 eingegeben wird, manuell oder automatisch mittels eines entsprechenden Sensors, der hier nicht näher dargestellt ist.

### Bezugszeichenliste

- 1: Gleitringdichtung
- 2: Kanal
- 3: stehendes Bauteil
- 4: Drehachse
- 5: umlaufendes Bauteil
- 6: Leckageraum
- 7: Leckagekanal
- 8: Abschnitt
- 9: Gehäuse
- 10: Leckagesensor
- 11: erster Temperatursensor
- 12: zweiter Temperatursensor
- 13: Heizelement
- 14: Steuervorrichtung
- 15: Gehäuse

## Patentansprüche

1. Verfahren zur Messung der Größe eines Leckagestromes einer Dichtung, wobei auf einer Leckageseite der Dichtung ein Leckagesensor (10) vorgesehen ist, der wenigstens ein Heizelement (13) und wenigstens zwei Temperatursensoren (11, 12) umfasst, die in wärmeübertragender Verbindung mit dem Leckagestrom stehen, mit den folgenden Schritten:
fortlaufendes oder intermittierendes Erfassen einer Temperaturdifferenz im Leckagestrom über einem vom Leckagestrom durchströmten Abschnitt (8) eines Leckagekanals (7) mit den Temperatursensoren (11, 12), wobei gleichzeitig eine vorbestimmte konstante Referenzwärmemenge mit dem Heizelement (13) erzeugt wird und in den Leckagestrom im Abschnitt (8) des Leckagekanals (7) übertragen wird, und Ermitteln der Größe des aktuellen Leckagestromes in Abhängigkeit der aktuell erfassten Temperaturdifferenz; oder
fortlaufendes oder intermittierendes Einstellen einer konstanten Temperaturdifferenz im Leckagestrom über einem vom Leckagestrom durchströmten Abschnitt (8) eines Leckagekanals (7) durch Erzeugen einer variablen Wärmemenge mit dem Heizelement (13) und Übertragen der Wärmemenge in den Leckagestrom im Abschnitt (8) des Leckagekanals (7), und Ermitteln der Größe des aktuellen Leckagestromes in Abhängigkeit der aktuell erzeugten Wärmemenge;
**dadurch gekennzeichnet, dass**
bei der Ermittlung der Größe des aktuellen Leckagestromes zusätzlich zu der aktuell erfassten Temperaturdifferenz bei der Erzeugung einer konstanten Referenzwärmemenge oder zusätzlich zu der aktuell erzeugten Wärmemenge bei Einstellung einer konstanten Temperaturdifferenz die aktuelle absolute Temperatur des Leckagestromes im durchströmten Abschnitt (8) vor dem Heizelement (13) erfasst und berücksichtigt wird.

2. Verfahren gemäß Anspruch 1, **dadurch gekennzeichnet, dass** zur Kalibrierung der Messung zunächst eine vorgegebene Temperaturdifferenz im Leckagestrom über dem durchströmten Abschnitt (8) eingestellt wird, indem der Leckagestrom in dem durchströmten Abschnitt (8) mit dem Heizelement (13) aufgeheizt wird, wobei die sich bei Erreichen der vorgegebenen Temperaturdifferenz ergebende vom Heizelement (13) erzeugte Wärmemenge als Referenzwärmemenge bestimmt wird.

3. Verfahren gemäß der Ansprüche 1 und 2, **dadurch gekennzeichnet, dass** die Kalibrierung der Messung für verschiedene absolute Temperaturen des Leckagestromes im durchströmten Abschnitt (8) vor dem Heizelement (13) durchgeführt wird, und verschiedene Referenzwärmemengen bestimmt und der jeweiligen absoluten Temperatur zugeordnet werden, und dass bei der Ermittlung der Größe des aktuellen Leckagestromes diese Temperaturzuordnung berücksichtigt wird.

4. Verfahren gemäß einem der Ansprüche 2 oder 3, **dadurch gekennzeichnet, dass** zur Kalibrierung der Messung ferner mit dem Heizelement (13) die wenigstens eine Referenzwärmemenge erzeugt wird und durch gezieltes Variieren der Größe des Leckagestromes die sich jeweils dabei einstellende Temperaturdifferenzen erfasst und der jeweiligen Leckagestromgröße zugeordnet wird, und dass bei der Ermittlung der Größe des aktuellen Leckagestromes diese Temperaturdifferenzzuordnung berücksichtigt wird.

5. Verfahren gemäß den Ansprüchen 3 und 4, **dadurch gekennzeichnet, dass** die Temperaturdifferenzzuordnung mittels einer Leckagestromgrößen-Temperaturdifferenz-Kurve erfolgt und die Temperaturzuordnung mittels einer Zuordnung einer Leckagestromgrößen-Temperaturdifferenz-Kurve zu der jeweiligen absoluten Temperatur erfolgt.

6. Verfahren gemäß einem der Ansprüche 2 oder 3, **dadurch gekennzeichnet, dass** zur Kalibrierung der Messung ferner mit dem Heizelement (13) die konstante Temperaturdifferenz im Leckagestrom über dem vom Leckagestrom durchströmten Abschnitt (8) des Leckagekanals (7) erzeugt wird und durch gezieltes Variieren der Größe des Leckagestromes die dafür jeweils notwendige mit dem Heizelement (13) zu erzeugende Wärmemenge erfasst und der jeweiligen Leckagestromgröße zugeordnet wird, und dass bei der Ermittlung der Größe des aktuellen Leckagestromes diese Wärmemengenzuordnung berücksichtigt wird.

7. Verfahren gemäß den Ansprüchen 3 und 6, **dadurch gekennzeichnet, dass** die Wärmemengenzuordnung mittels einer Leckagestromgrößen-Wärmemenge-Kurve erfolgt und die Temperaturzuordnung mittels einer Zuordnung einer Leckagestromgrößen-Wärmemenge-Kurve zu der jeweiligen absoluten Temperatur erfolgt.

8. Verfahren gemäß einem der Ansprüche 1 bis 7, **dadurch gekennzeichnet, dass** eine Grenzleckagestromgröße vorgegeben wird und die aktuell ermittelte Größe des Leckagestromes mit der Grenzleckagestromgröße verglichen und in Abhängigkeit dieses Vergleichs eine Warnmeldung und/oder ein Warnsignal ausgegeben wird, wobei die Grenzleckagestromgröße in Abhängigkeit eines Durchmessers der Dichtung vorgegeben wird, wobei insbesondere verschiedenen Durchmessern der Dichtung verschiedene Grenzleckagestromgrößen zugeordnet werden.

9. Verfahren gemäß Anspruch 8, **dadurch gekennzeichnet, dass** die vorgegebene Grenzleckagestromgröße in Abhängigkeit wenigstens eines weiteren Parameters, der variabel einstellbar ist, vorgegeben wird, wobei der wenigstens eine Parameter wenigstens eine der nachfolgenden Größen und/oder Angaben beschreibt:
- Art des Mediums, dessen Mediumstrom mit der Dichtung abgedichtet wird, insbesondere Öl oder Wasser;
- Betriebstemperatur eines mit der Dichtung abgedichteten Mediumstromes;
- Betriebstemperaturbereich eines mit der Dichtung abgedichteten Mediumstromes.

10. Verfahren gemäß einem der Ansprüche 1 bis 9, **dadurch gekennzeichnet, dass** bei der Ermittlung der Größe des aktuellen Leckagestromes zusätzlich der Aggregatzustand und/oder die Zusammensetzung eines den Leckagestrom ausbildenden Mediums berücksichtigt wird.

11. Verfahren gemäß einem der Ansprüche 1 bis 10, **dadurch gekennzeichnet, dass** die Größe eines Leckagestromes einer Gleitringdichtung (1) in einer Drehdurchführung gemessen wird.

## Claims

1. Method for measuring the size of a leakage flow of a seal, wherein a leakage sensor (10) is provided on a leakage side of the seal, said leakage sensor comprising at least one heating element (13) and at least two temperature sensors (11, 12) which are in heat-transferring connection with the leakage flow, comprising the following steps:
continuous or intermittent detection of a temperature difference by means of the temperature sensors (11, 12) in the leakage flow over a section (8) of a leakage channel (7) through which the leakage flow flows, wherein a predetermined constant reference heat quantity is simultaneously generated with the heating element (13) and transmitted into the leakage flow in the section (8) of the leakage channel (7), and determination of the size of the current leakage flow as a function of the currently detected temperature difference; or
continuously or intermittently setting a constant temperature difference in the leakage flow over a section (8) of a leakage channel (7) through which the leakage flow flows by generating a variable amount of heat with the heating element (13) and transferring the amount of heat into the leakage flow in the section (8) of the leakage channel (7), and determining the size of the current leakage flow as a function of the currently generated amount of heat;
**characterized in that**,
when determining the size of the current leakage flow, in addition to the currently detected temperature difference when a constant reference heat quantity is generated or in addition to the currently generated heat quantity when a constant temperature difference is set, the current absolute temperature of the leakage flow in the section (8) through which the heat flows upstream of the heating element (13) is detected and taken into account.

2. Method according to claim 1, **characterized in that**, in order to calibrate the measurement, a predetermined temperature difference is set at first in the leakage flow over the flowed-through section (8) by heating the leakage flow in the flowed-through section (8) with the heating element (13), the wherein heat quantity produced by the heating element (13) when the predetermined temperature difference is reached is determined as the reference heat quantity.

3. Method according to claims 1 and 2, **characterized in that** the calibration of the measurement is carried out for different absolute temperatures of the leakage flow in the flowed-through section (8) in front of the heating element (13), and different reference heat quantities are determined and assigned to the respective absolute temperature, and **in that** this temperature assignment is taken into account when determining the size of the current leakage flow.

4. Method according to one of claims 2 or 3, **characterized in that**, for calibration of the measurement, the at least one reference heat quantity is also generated with the heating element (13) and, by targeted variation of the size of the leakage flow, the temperature differences which are respectively produced in the process are detected and assigned to the respective leakage flow size, and **in that** this temperature difference assignment is taken into account when determining the size of the current leakage flow.

5. Method according to claims 3 and 4, **characterized in that** the temperature difference assignment is carried out by means of a leakage flow size-temperature difference curve and the temperature assignment is carried out by means of an assignment of a leakage flow size-temperature difference curve to the respective absolute temperature.

6. Method according to one of claims 2 or 3, **characterized in that**, for calibration of the measurement, furthermore the constant temperature difference in the leakage flow is generated with the heating element (13) over the section (8) of the leakage channel (7) through which the leakage flow flows, and by targeted variation of the size of the leakage flow, the heat quantity required for this in each case to be generated with the heating element (13) is detected and assigned to the respective leakage flow size, and **in that** this heat quantity assignment is taken into account when determining the size of the current leakage flow.

7. Method according to claims 3 and 6, **characterized in that** the heat quantity assignment is carried out by means of a leakage flow size-heat quantity curve and the temperature assignment is carried out by means of an assignment of a leakage flow size-heat quantity curve to the respective absolute temperature.

8. Method according to one of claims 1 to 7, **characterized in that** a limit leakage flow size is specified and the currently determined size of the leakage flow is compared with the limit leakage flow size and a warning message and/or a warning signal is output as a function of this comparison, wherein the limit leakage flow size is specified as a function of a diameter of the seal, wherein in particular different limit leakage flow sizes are assigned to different diameters of the seal.

9. Method according to claim 8, **characterized in that** the predetermined limit leakage flow size is predetermined as a function of at least one further parameter which is variably adjustable, wherein the at least one parameter describes at least one of the following quantities and/or specifications:
- type of medium whose medium flow is sealed with the seal, especially oil or water;
- operating temperature of a medium flow sealed by the seal;
- operating temperature range of a medium flow sealed by the seal.

10. Method according to one of claims 1 to 9, **characterized in that**, when determining the size of the current leakage flow, the aggregate state and/or the composition of a medium forming the leakage flow is additionally taken into account.

11. Method according to one of claims 1 to 10, **characterized in that** the size of a leakage flow of a mechanical seal (1) in a rotary union is measured.

## Revendications

1. Procédé de mesure de la grandeur d'un courant de fuite d'un joint d'étanchéité, un capteur de fuite (10) étant prévu sur un côté de fuite du joint d'étanchéité, lequel comprend au moins un élément chauffant (13) et au moins deux capteurs de température (11, 12) qui sont en liaison de transfert de chaleur avec le courant de fuite, présentant les étapes suivantes :
détection continue ou intermittente d'une différence de température dans le courant de fuite sur une section (8) d'un canal de fuite (7) traversée par le courant de fuite avec les capteurs de température (11, 12), une quantité de chaleur de référence constante prédéterminée étant produite simultanément avec l'élément chauffant (13) et transmise dans le courant de fuite dans la section (8) du canal de fuite (7), et détermination de la grandeur du courant de fuite actuel en fonction de la différence de température actuellement détectée ; ou
réglage continu ou intermittent d'une différence de température constante dans le courant de fuite sur une section (8) d'un canal de fuite (7) traversée par le courant de fuite, par production d'une quantité de chaleur variable avec l'élément chauffant (13) et transmission de la quantité de chaleur dans le courant de fuite dans la section (8) du canal de fuite (7), et détermination de la grandeur du courant de fuite actuel en fonction de la quantité de chaleur actuellement produite ;
**caractérisé en ce que**,
lors de la détermination de la grandeur du courant de fuite actuel, en plus de la différence de température actuellement détectée lors de la production d'une quantité de chaleur de référence constante ou en plus de la quantité de chaleur actuellement produite lors du réglage d'une différence de température constante, la température absolue actuelle du courant de fuite dans la section traversée (8) en amont de l'élément chauffant (13) est détectée et prise en compte.

2. Procédé selon la revendication 1, **caractérisé en ce que**, pour étalonner la mesure, on règle d'abord une différence de température prédéfinie dans le courant de fuite sur la section traversée (8) en chauffant le courant de fuite dans la section traversée (8) avec l'élément chauffant (13), la quantité de chaleur produite par l'élément chauffant (13) lorsque la différence de température prédéfinie est atteinte étant déterminée comme quantité de chaleur de référence.

3. Procédé selon les revendications 1 et 2, **caractérisé en ce que** l'étalonnage de la mesure est effectué pour différentes températures absolues du courant de fuite dans la section traversée (8) en amont de l'élément chauffant (13), et différentes quantités de chaleur de référence sont déterminées et associées à la température absolue respective, et **en ce que** cette association de température est prise en compte lors de la détermination de la grandeur du courant de fuite actuel.

4. Procédé selon l'une des revendications 2 ou 3, **caractérisé en ce que**, pour l'étalonnage de la mesure, on produit en outre ladite au moins une quantité de chaleur de référence avec l'élément chauffant (13) et, en faisant varier de manière ciblée la grandeur du courant de fuite, on détecte les différences de température qui s'établissent à chaque fois et on les associe à la grandeur respective du courant de fuite, et **en ce que** l'on tient compte de cette association de différence de température lors de la détermination de la grandeur du courant de fuite actuel.

5. Procédé selon les revendications 3 et 4, **caractérisé en ce que** l'association de différence de température s'effectue au moyen d'une courbe différence de température/grandeur du courant de fuite et l'association de température s'effectue au moyen d'une association d'une courbe différence de température/grandeur du courant de fuite à la température absolue respective.

6. Procédé selon l'une des revendications 2 ou 3, **caractérisé en ce que**, pour l'étalonnage de la mesure, on produit en outre avec l'élément chauffant (13) la différence de température constante dans le courant de fuite sur la section (8) du canal de fuite (7) traversée par le courant de fuite et, en faisant varier de manière ciblée la grandeur du courant de fuite, on détecte la quantité de chaleur respectivement nécessaire à cet effet qui doit être produite avec l'élément chauffant (13) et on l'associe à la grandeur respective du courant de fuite, et **en ce que** cette association de quantité de chaleur est prise en compte lors de la détermination de la grandeur du courant de fuite actuel.

7. Procédé selon les revendications 3 et 6, **caractérisé en ce que** l'association de quantité de chaleur s'effectue au moyen d'une courbe grandeur du courant de fuite/quantité de chaleur et l'association de température s'effectue au moyen d'une association d'une courbe grandeur du courant de fuite/quantité de chaleur à la température absolue respective.

8. Procédé selon l'une des revendications 1 à 7, **caractérisé en ce qu'**une grandeur de courant de fuite limite est prédéfinie et la grandeur actuellement déterminée du courant de fuite est comparée à la grandeur de courant de fuite limite et un message d'avertissement et/ou un signal d'avertissement est émis en fonction de cette comparaison, la grandeur de courant de fuite limite étant prédéfinie en fonction d'un diamètre du joint d'étanchéité, différentes grandeurs de courant de fuite limite étant en particulier associées à différents diamètres du joint d'étanchéité.

9. Procédé selon la revendication 8, **caractérisé en ce que** la grandeur de courant de fuite limite prédéfinie est prédéfinie en fonction d'au moins un autre paramètre qui peut être réglé de manière variable, ledit au moins un paramètre décrivant au moins l'une des grandeurs et/ou informations suivantes :
- type du milieu dont le courant de milieu est rendu étanche par le joint d'étanchéité, en particulier de l'huile ou de l'eau ;
- température de service d'un courant de milieu rendu étanche par le joint d'étanchéité ;
- plage de température de fonctionnement d'un courant de milieu rendu étanche par le joint d'étanchéité.

10. Procédé selon l'une des revendications 1 à 9, **caractérisé en ce que**, lors de la détermination de la grandeur du courant de fuite actuel, on tient compte en outre de l'état physique et/ou de la composition d'un milieu formant le courant de fuite.

11. Procédé selon l'une des revendications 1 à 10, **caractérisé en ce que** l'on mesure la grandeur d'un courant de fuite d'une garniture mécanique d'étanchéité (1) dans un joint tournant.
